# EUROPEAN PATENT SPECIFICATION

(11) **EP 2 855 108 B1**
(45) Date of publication and mention of the grant of the patent: **18.03.2020**
(21) Application number: 12727343.1
(22) Date of filing: 01.06.2012
(51) Int. Cl.: B27N 1/00, B27N 1/02, B04C 7/00

(54) **BLOW LINE WITH A BEND, AND FIBERS-PROCESSING PLANT WITH A BLOW LINE**
BLOWLINE MIT EINEM KRÜMMER UND FASERVERARBEITUNGSANLAGE MIT EINER BLOWLINE
INSTALLATION DE SOUFFLAGE AVEC UN COUDE, ET USINE DE TRAITEMENT DE FIBRES AVEC UNE INSTALLATION DE SOUFFLAGE

(43) Date of publication of application: 08.04.2015
(73) Proprietor: Sunds Fibertech AB, 861 36 Timrá (SE)
(72) Inventor: BIRVE, Johan, S-86551 Ankarsvik (SE); SCHEDIN, Jens, S-85239 Sundsvall (SE); NEISTRÖM, Tommy, S-86432 Matfors (SE)
(74) Representative: Hartdegen, Helmut
(86) International application number: PCT/EP2012/060407
(87) International publication number: WO 2013/178287

(56) References cited:
- EP-A2- 2 213 431
- DE-A1- 3 609 506
- DE-B3-102008 026 677
- US-A- 3 672 503
- US-A- 4 205 965
- US-A- 4 555 254
- US-A- 4 710 268
- US-A- 4 937 100

## Description

The present invention relates to a blow line for guiding a steam-and-fibers stream to a dryer or a pulp chest of a fibers-processing plant, such as a fiberboard plant, a pulp mill or a board mill, and a fibers-processing plant, such as a fiberboard plant, a pulp mill or a board mill.

EP 2 213 431 A2 discloses a bend, a blow line, and a fiberboard plant. In this known fiberboard plant, a refiner makes fibers out of wood chips by using high-pressure steam and rotating refiner discs. The high-pressure steam blows the fibers out into the blow line resulting in a steam-and-fibers stream which the blow line guides to the dryer. Depending on the size and design of the fiberboard plant, the blow line may have a length of up to 100 m, and in the blow line, the fibers flow at a speed from 50 m/s up to 474 m/s. Several nozzles are arranged at the tube section and inject atomized glue into the steam-and-fibers stream. The dryer is preferably a tube dryer, and the blow line extends into the tube of the tube dryer so that the first outlet socket of the bend empties into the dryer and ejects the steam-and-fibers stream into the hot, dry air in the tube.

US3672503 discloses a blow line for guiding a stream containing fibres comprising a device for splitting the stream into streams containing fibres of different sizes.

Due to the moisture contained in the steam of the steam-and-fibers stream, the drying of the fibers is quite energy consuming.

It is an object of the present invention to reduce the energy consumption in a fiberboard plant or another fibers-processing plant, such as a pulp mill or a board mill.

This object is achieved by a blow line according to claim 1 and a fibers-processing plant according to claim 7. Advantageous embodiments are described in the subclaims.

According to a first aspect, the invention provides or suggests a blow line for introducing a steam-and-fibers stream into a dryer or a pulp chest of a fibers-processing plant, such as a fiberboard plant, a pulp mill or a board mill, comprising:
- an inlet socket for the steam-and-fibers stream;
- a first outlet socket for emptying into the dryer or pulp chest;
- a bent section that connects the inlet socket to the first outlet socket;
- a second outlet socket arranged radially inwardly with respect to the first outlet socket;
wherein:
- the bent section connects the inlet socket to the second outlet socket.

The bent section deflects the steam-and-fibers stream introduced through the inlet socket so that the fibers, due to their higher inertia and mass density in comparison with the steam, are concentrated on radially outward trajectories and thus are separated from a steam stream that is particularly more or less pure or purified, on radially inward trajectories. Thus, the second outlet socket allows for discharging the separated steam, and the first outlet socket allows for injecting the concentrated, separated steam-and-fibers stream into the dryer or pulp chest. Since the separated steam-and-fibers stream is concentrated, namely contains less steam and thus less moisture in comparison with the steam-and-fibers stream introduced through the inlet socket, less energy will be required to dry the fibers in later process steps.

The separated steam may be recycled as needed, and may for instance be guided back to a steam recycling means such as a pre-steaming bin and/or a refiner, and/or to a heat exchanger and/or to a condenser and/or to another steam consumer.

The bend may be designed in any way as needed and may for instance comprise at least one further inlet socket and/or at least one further outlet socket and/or at least one further bent section.

Each of the inlet socket and the first outlet socket may be designed in any way as needed and may for instance have a rectangular or a square or a circular or a semi-circular or an elliptical or a semi-elliptical or an oval or a semi-oval cross-section and/or may for instance be linear or straight.

The second outlet socket may be designed in any way as needed and may for instance have a rectangular or a square or a circular or a semi-circular or an elliptical or a semi-elliptical or an oval or a semi-oval cross-section and/or may for instance be at least partially linear or straight and/or at least partially bent.

The bent section may be designed in any way as needed and may for instance have a rectangular or a square or a circular or a semi-circular or an elliptical or a semi-elliptical or an oval or a semi-oval cross-section and/or may for instance be bent following a circular arc or an elliptical arc or an oval arc or a parabolic curve or a helical curve or a spiral curve. Preferably, said helical or spiral curve has at least one complete turn and/or at most eight complete turns.

It may be provided that the bend further comprises:
- a sensor for measuring a flow parameter of the stream, particularly the separated stream, in the first outlet socket and/or in the second outlet socket;
- a valve in the second outlet socket for regulating the flow of the stream, particularly the separated stream, in the second outlet socket and/or in the first outlet socket.

The sensor and the valve allow for adjusting a flow parameter of the stream in the first outlet socket and/or in the second outlet socket by regulating the flow and/or pressure of the stream in the second outlet socket and/or in the first outlet socket.

The bend may be designed in any way as needed and may for instance comprise at least one further sensor, particularly for measuring a flow parameter of the stream, particularly the separated stream, in the second outlet socket and/or in the first outlet socket, and/or at least one further valve, particularly for regulating the flow of the stream, particularly the separated stream, in the first outlet socket and/or in the second outlet socket.

The valve may be designed in any way as needed, for instance as a butterfly valve.

It may be provided that the bend further comprises a control unit connected to each sensor and each valve and designed for directing each valve dependent on at least one of the measured flow parameters.

The control unit may be realized in any way as needed, for instance as a separate unit or as an integrated unit of a central control unit of the plant. Alternatively or in addition, the control unit may be controlled by another control unit, such as a central control unit of the plant. Alternatively or in addition, the control unit may be designed to perform a closed-loop control, with at least one of the flow parameters being the process variable and the valve position or valve opening of at least one of the valves being the manipulated variable, and/or an open-loop control and/or an adaptive control. Alternatively or in addition, the control performed by the control unit may further depend as needed on at least one other physical quantity and/or at least one parameter of the plant, such as the flow velocity, the humidity, the pressure, or the temperature of the air in the dryer or the humidity or the temperature of the stream in the first outlet socket or the humidity or the temperature of the stream in the inlet socket.

According to a second aspect, the invention provides or suggests a blow line for guiding a steam-and-fibers stream to a dryer or a pulp chest of a fibers-processing plant, such as a fiberboard plant, a pulp mill or a board mill, comprising:
- an essentially linear tube section with a downstream end;
- a bend comprising a first outlet socket for emptying into the dryer or pulp chest, and a bent section that connects the downstream end of the tube section to the first outlet socket;
wherein:
- the bend further comprises a second outlet socket arranged radially inwardly with respect to the first outlet socket;
- the bent section connects the downstream end of the tube section to the second outlet socket.

The bent section deflects the steam-and-fibers stream introduced through the inlet socket so that the fibers, due to their higher inertia and mass density in comparison with the steam, are concentrated on radially outward trajectories and thus are separated from a steam stream, which is particularly more or less pure or purified, on radially inward trajectories. Thus, the second outlet socket allows for discharging the separated steam, and the first outlet socket allows for injecting the concentrated, separated steam-and-fibers stream into the dryer or pulp chest. Since the separated steam-and-fibers stream is concentrated, namely contains less steam and thus less moisture in comparison with the steam-and-fibers stream introduced through the inlet socket, less energy will be required to dry the fibers.

The blow line may be designed in any way as needed. For instance, it may be designed for guiding the steam-and-fibers stream from a refiner of the fiberboard plant to the dryer or pulp chest, and the tube section may have an upstream end for connection with the refiner. The blow line may have for instance a length of up to 200 m, and in the blow line, the fibers may flow for instance at a speed from 30 m/s up to several hundred m/s.

The bend may be designed in any way as needed. For instance, it may comprise an inlet socket for connection with the downstream end of the tube section, and the bent section may connect the downstream end of the inlet socket to the first outlet socket and the second outlet socket and thus connects the downstream end of the tube section via the inlet socket to the first outlet socket and the second outlet socket.

In general, the tube section is required to be as linear or straight as possible since any curve bears the risk that fibers will stick at the inner wall of the blow line tube. Thus, the bend which is often required due to a restricted available installation space, is placed only at the downstream end of the tube section to achieve a desired change of the flow direction of the steam-and-fibers stream with respect to the orientation of the dryer.

The bend may be designed in any way as needed, for instance as one of the bends according to the first aspect of the invention.

It may be provided that the blow line further comprises:
- a sensor for measuring a flow parameter of the stream, particularly the separated stream, in the first outlet socket and/or in the second outlet socket;
- a valve in the second outlet socket for regulating the flow of the stream, particularly the separated stream, in the second outlet socket and/or in the first outlet socket.

The sensor and the valve allow for adjusting a flow parameter of the stream in the first outlet socket and/or in the second outlet socket by regulating the flow and/or pressure of the stream in the second outlet socket and/or in the first outlet socket.

The blow line may be designed in any way as needed and may for instance comprise at least one further sensor, particularly for measuring a flow parameter of the stream, particularly the separated stream, in the second outlet socket and/or in the first outlet socket, and/or at least one further valve, particularly for regulating the flow of the stream, particularly the separated stream, in the first outlet socket and/or in the second outlet socket.

It may be provided that the blow line further comprises a control unit connected to each sensor and each valve and designed for directing each valve dependent on at least one of the measured flow parameters.

Preferably, the blow line further comprises at least one nozzle at the tube section for injecting glue into the steam-and-fibers stream.

The nozzle may be designed in any way as needed, for instance as a steam atomizing nozzle using steam to atomize the glue.

According to a third aspect, the invention provides or suggests a fibers-processing plant, such as a fiberboard plant, a pulp mill or a board mill, comprising:
- a refiner for making fibers and blowing out a steam-and-fibers stream;
- a dryer for drying the fibers or a pulp chest, particularly for collecting and/or storing the fibers;
- a blow line for guiding the steam-and-fibers stream blown out by the refiner, to the dryer or pulp chest;
wherein the blow line comprises:
- an essentially linear tube section with an upstream end for connection with the refiner, and a downstream end;
- a bend comprising a first outlet socket for emptying into the dryer or pulp chest, and a bent section that connects the downstream end of the tube section to the first outlet socket;
wherein:
- the bend further comprises a second outlet socket arranged radially inwardly with respect to the first outlet socket;
- the bent section connects the downstream end of the tube section to the second outlet socket.

The bent section deflects the steam-and-fibers stream introduced through the inlet socket so that the fibers, due to their higher inertia and mass density in comparison with the steam, are concentrated on radially outward trajectories and thus are separated from a steam stream, that is particularly more or less pure or purified, on radially inward trajectories. Thus, the second outlet socket allows for discharging the separated steam, and the first outlet socket allows for injecting the concentrated, separated steam-and-fibers stream into the dryer or pulp chest. Since the separated steam-and-fibers stream is concentrated, namely contains less steam and thus less moisture in comparison with the steam-and-fibers stream introduced through the inlet socket, less energy will be required to dry the fibers.

The blow line may be designed in any way as needed, for instance as one of the blow lines according to the second aspect of the invention.
The bend may be designed in any way as needed, for instance as one of the bends according to the first aspect of the invention.

The dryer may be designed in any way as needed, for instance as a tube dryer. Preferably in this case, the blow line extends into the tube of the tube dryer so that the first outlet socket of the bend empties into the dryer and ejects the steam-and-fibers stream into the hot, dry air in the tube.

It may be provided that the fiberboard plant further comprises:
- a sensor for measuring a flow parameter of the stream, particularly the separated stream, in the first outlet socket and/or in the second outlet socket;
- a valve in the second outlet socket for regulating the flow of the stream, particularly the separated stream, in the second outlet socket and/or in the first outlet socket.

The sensor and the valve allow for adjusting a flow parameter of the stream in the first outlet socket and/or in the second outlet socket by regulating the flow and/or pressure of the stream in the second outlet socket and/or in the first outlet socket.

The fiberboard plant may be designed in any way as needed and may for instance comprise at least one further sensor, particularly for measuring a flow parameter of the stream, particularly the separated stream, in the second outlet socket and/or in the first outlet socket, and/or at least one further valve, particularly for regulating the flow of the stream, particularly the separated stream, in the first outlet socket and/or in the second outlet socket.
It may be provided that the fiberboard plant further comprises a control unit connected to each sensor and each valve and designed for directing each valve dependent on at least one of the measured flow parameters.

It may be provided that the bend is incorporated into or arranged in the dryer or pulp chest.

Preferably, the fiberboard plant further comprises at least one nozzle at the tube section for injecting glue into the steam-and-fibers stream.

In all aspects, each flow parameter measured by one of the sensors may be chosen freely as needed and may for instance be the pressure or the flow velocity or the mass flow rate, of the stream in the first or second outlet socket. Thus, if for instance the flow of the stream in the second outlet socket is regulated for instance by reducing the valve opening, the pressure and/or flow velocity and/or mass flow rate of the stream in the first outlet socket will rise, and vice versa.

In all aspects, it may be provided that the first outlet socket comprises an upstream section oppositely bent with respect to the bent section of the bend.

This upstream section allows for deflecting the separated steam-and-fibers stream into a desired direction and for injecting it in said desired direction into the dryer or pulp chest, independently from the direction of this stream leaving the bent section.

The upstream section may be designed in any way as needed and may for instance have a rectangular or a square or a circular or a semi-circular or an elliptical or a semi-elliptical or an oval or a semi-oval cross-section and/or may for instance be bent following a circular arc or an elliptical arc or an oval arc or a parabolic curve or a helical curve or a spiral curve.

In all aspects, it may be provided that the bent section has:
- a bending radius of at least 30 cm and/or at most 300 cm; and/or
- a first bending angle of at least 30° and/or at most 200°.

This first bending angle is defined as the angle between the flow direction of the steam-and-fibers stream entering the bent section, and the flow direction of the separated steam-and-fibers stream leaving the bent section.

If the density of the fibers is equal or nearly equal to that of the steam, it may be preferred or advisable to optimize or increase the success or effect of the separation of the bend by choosing an even greater first bending angle of more than 200°, or yet by designing the bent section in such a manner that it follows a helical curve or helix with at least one turn. If for instance a bent section follows a helical curve with two turns and a quarter, the steam-and-fibers stream flowing through it will rotate about a rotation angle of 810° - which is the sum of 720° for the two complete turns and 90° for the one quarter turn - but will be deflected in total only by the first bending angle which is the difference of the rotation angle minus the product of the number of complete turns times 360°, namely 90° = 810° - 2· 360° in this instance.

The remarks about one of the aspects of the invention, especially about particular features of this aspect, also appropriately apply to the other aspects of the invention.

In the following, preferred embodiments and examples of the invention will exemplarily be explained in more detail with respect to the appending drawings. The particular features resulting thereof are not restricted to the particular embodiments and examples, but may be combined with one or more particular features described or mentioned above and/or with one or more particular features of other embodiments or examples. The details shown in the drawings are only of explanatory nature and shall not be construed in any restrictive manner. The reference signs contained in the claims shall in no way restrict the scope of the present invention, but shall only refer to the embodiments and examples shown in the drawings. The drawings show in:
- FIG. 1: a cut plan view of a downstream part of a first embodiment of a blow line with a first embodiment of a bend;
- FIG. 2: a cut plan view of a downstream part of a second embodiment of a blow line with a second embodiment of a bend;
- FIG. 3: a cut plan view of a downstream part of a third embodiment of a blow line with a third embodiment of a bend;
- FIG. 4: a cut plan view of a downstream part of a fourth embodiment of a blow line with a fourth embodiment of a bend;
- FIG. 5: a cut plan view of a part of a first embodiment of a fiberboard plant with the blow line of FIG. 1;
- FIG. 6: a cut plan view of a part of a second embodiment of a fiberboard plant with the blow line of FIG. 2;
- FIG. 7: a cut plan view of a part of a third embodiment of a fiberboard plant with the blow line of FIG. 3.

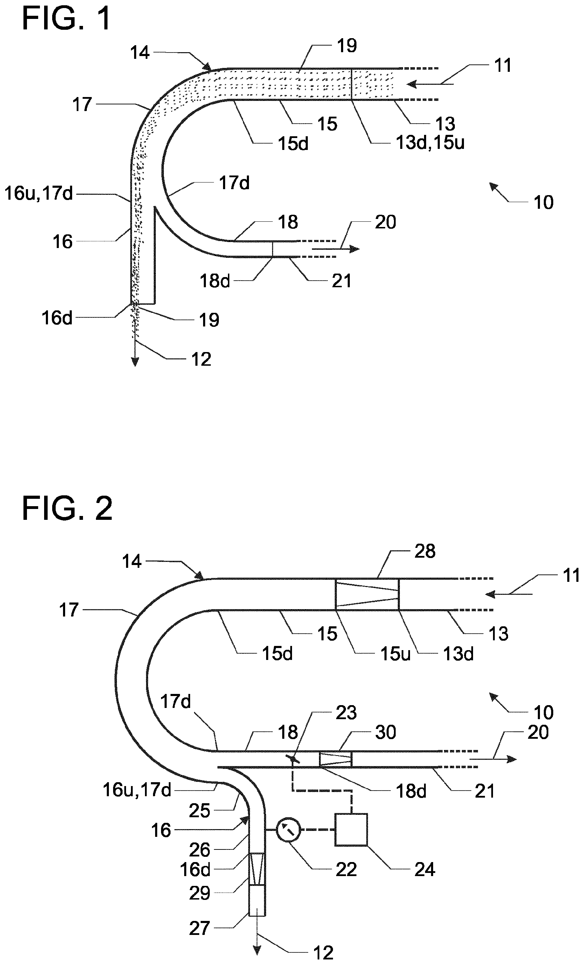

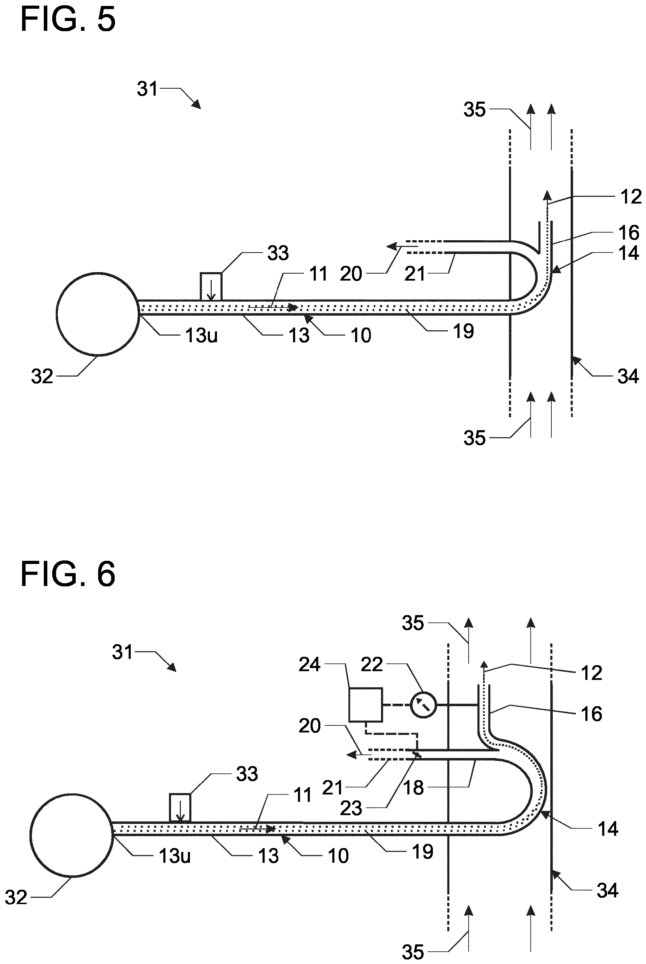

In FIG. 1, there is schematically depicted a downstream part of a first embodiment of a blow line 10 for guiding a steam-and-fibers stream, represented by arrows 11, 12, to a not shown dryer, such as that shown at reference sign 34 in FIG. 5 to FIG. 7, of a not shown fibers-processing plant, such as the fiberboard plant shown at reference sign 31 in FIG. 5 to FIG. 7. This blow line 10 comprises a linear tube section 13 and a bend 14 in a first embodiment. The tube section 13 has a not shown upstream end, such as that shown at reference sign 13u in FIG. 5 to FIG. 7, and a downstream end 13d. The bend 14 comprises an inlet socket 15 connected to the downstream end 13d, a first outlet socket 16 for emptying into the dryer, a bent section 17, and a second outlet socket 18 arranged radially inwardly with respect to the first outlet socket 16. The bent section 17 connects the downstream end 15d of the inlet socket 15 to the first outlet socket 16 and the second outlet socket 18, and thus connects the downstream end 13d via the inlet socket 15 to the first outlet socket 16 and the second outlet socket 18.

In this first embodiment of the blow line 10, the tube section 13 has a circular cross-section.

The bent section 17 deflects the steam-and-fibers stream 11 introduced through the inlet socket 15 so that the fibers 19 of the steam-and-fibers stream 11, due to their higher inertia and mass density in comparison with the steam, are concentrated on radially outward trajectories and thus are separated from a more or less pure or purified steam stream or steam, represented by arrow 20, on radially inward trajectories. Thus, the separated steam stream 20 is discharged through the second outlet socket 18, and the separated steam-and-fibers stream 12 is injected through the first outlet socket 15 into the dryer.

In this first embodiment of the bend 14, each of the inlet socket 15 and the first outlet socket 16 is linear or straight or extends linearly or straightly and has a circular cross-section, whereas the bent section 17 also has a circular cross-section but is bent following a circular arc with a first bending angle of 90°. Here, in this context, this first bending angle is defined as the angle between the flow direction of the steam-and-fibers stream 11 entering the bent section 17, and the flow direction of the separated steam-and-fibers stream 12 leaving the bent section 17 or as the angle between the flow direction of the incoming steam-and-fibers stream 11 leaving the downstream end 13d of the tube section 13 and entering the upstream end 15u of the inlet socket 15, and the flow direction of the separated steam-and-fibers stream 12 leaving the downstream end 17d of the bent section 17 and entering the upstream end 16u of the first outlet socket 16.

In this first embodiment of the bend 14, the second outlet socket 18 branches off or diverges from the downstream end 17d of the bent section 17, has a circular cross-section, and is partly bent and partly linear or straight, namely bent at its upstream section and linear or straight at its downstream section. Its downstream end 18d is connected to a recycling tube 21 for guiding the separated steam stream 20 to a not shown steam recycling means. The recycling tube 21 has a circular cross-section.

In this first embodiment of the blow line 10, the inside diameter of the tube section 13 equals the inside diameter of the inlet socket 15 and the inside diameter of the bent section 17, whereas the inside diameter of the first outlet socket 16 is less than the inside diameter of the bent section 17 and greater than the inside diameter of the second outlet socket 18. Further, the inside diameter of the recycling tube 21 equals the inside diameter of the second outlet socket 18.

In FIG. 2, there is schematically depicted a downstream part of a second embodiment of a blow line 10 for guiding a steam-and-fibers stream 11, 12 to a not shown dryer, such as that shown at reference sign 34 in FIG. 5 to FIG. 7, of a not shown a fibers-processing plant, such as the fiberboard plant shown at reference sign 31 in FIG. 5 to FIG. 7. This embodiment resembles the first embodiment of the blow line 10 so that merely the respective differences will be explained more extensively in the following.

In this second embodiment of the blow line 10, the bend 14 is designed according to a second embodiment resembling the first embodiment of the bend 14 so that merely the respective differences will be explained more extensively in the following. This bend 14 further comprises a pressure sensor 22 for measuring a pressure of the separated steam-and-fibers stream 12 in the first outlet socket 16, a butterfly valve 23 in the second outlet socket 18 for regulating and/or controlling the flow of the separated steam stream 20 in the second outlet socket 18, and a control unit 24. The control unit 24 is connected to the sensor 22 and the valve 23 by means of control wires represented by dashed lines, and is designed for directing and/or controlling the valve 23 dependent on the pressure measured by the sensor 22.

By means of the sensor 22, the valve 23, and the control unit 24, the pressure of the separated steam-and-fibers stream 12 in the first outlet socket 16 can be adjusted by regulating the flow of the separated steam stream 20 in the second outlet socket 18. For instance, if the flow of the separated steam stream 20 in the second outlet socket 18 is regulated by reducing the valve opening of the valve 23, the pressure of the separated steam-and-fibers stream 12 in the first outlet socket 16 will rise, and vice versa. The control unit 24 is designed according to requirements to perform a closed-loop control, with the pressure in the first outlet socket 16 being the process variable and the valve position or valve opening of the valve 23 being the manipulated variable, and/or an open-loop control and/or an adaptive control.

In this second embodiment of the bend 14, each of the inlet socket 15 and the bent section 17 has a square cross-section, whereas each of the first outlet socket 16 and the second outlet socket 18 has a rectangular cross-section. Further, the first bending angle of the bent section 17 is greater than 90°, namely for instance 180°, whereas the second outlet socket 18 is linear or straight or extends linearly or straightly. Further, the inside width of the inlet socket 15 equals the inside width of the bent section 17, the inside width of the first outlet socket 16, and the inside width of the second outlet socket 18, whereas the inside height of the inlet socket 15 equals the inside height of the bent section 17, and each of the inside height of the first outlet socket 16 and the inside height of the second outlet socket 18 equals half the inside height of the bent section 17.

In this second embodiment of the bend 14, the first outlet socket 16 comprises an upstream section 25 and a downstream section 26. The upstream section 25 has an upstream end being also the upstream end 16u of the first outlet socket 16, and a downstream end, and the downstream section 26 has an upstream end being also the downstream end of the upstream section 25, and a downstream end being also the downstream end 16d of the first outlet socket 16. The downstream section 26 is linear or straight or extends linearly or straightly, whereas the upstream section 25 is bent oppositely with respect to the bent section 17 and following a circular arc with a second bending angle of 90°. Here, in this context, this second bending angle is defined as the angle between the flow direction of the separated steam-and-fibers stream 12 leaving the downstream end 17d of the bent section 17 and entering the upstream end of the upstream section 25, and the flow direction of the separated steam-and-fibers stream 12 leaving the downstream end of the upstream section 25 and entering the upstream end of the downstream section 26. This upstream section 25 deflects the separated steam-and-fibers stream 12 into a desired direction, namely the direction turned by an angle of 90° with respect to the flow direction of the incoming steam-and-fibers stream 11 leaving the downstream end 13d of the tube section 13, and injects it in said desired direction into the dryer, independently from the direction of this stream 12 leaving the bent section 17. Said angle of 90° is the difference between the first bending angle of 180° and the second bending angle of 90°.

In this second embodiment of the blow line 10, the blow line 10 further comprises a short length of tube or spout 27, a first adapter piece 28, a second adapter piece 29, and a third adapter piece 30. The spout 27 is linear or straight or extends linearly or straightly and has a circular cross-section and an inside diameter which equals the inside height of the first outlet socket 16. The first adapter piece 28 is arranged between and connected to the downstream end 13d of the tube section 13 and the upstream end 15u of the inlet socket 15 and has an upstream end with a cross-section corresponding to the cross-section of the tube section 13, and a downstream end with a cross-section corresponding to that of the inlet socket 15. The second adapter piece 29 is arranged between and connected to the downstream end 16d of the first outlet socket 16 and the upstream end of the spout 27 and has an upstream end with a cross-section corresponding to the cross-section of the first outlet socket 16, and a downstream end with a cross-section corresponding to the cross-section of the spout 27. The third adapter piece 30 is arranged between and connected to the downstream end 18d of the second outlet socket 18 and the upstream end of the recycling tube 21 and has an upstream end with a cross-section corresponding to the cross-section of the second outlet socket 18, and a downstream end with a cross-section corresponding to the cross-section of the recycling tube 21.

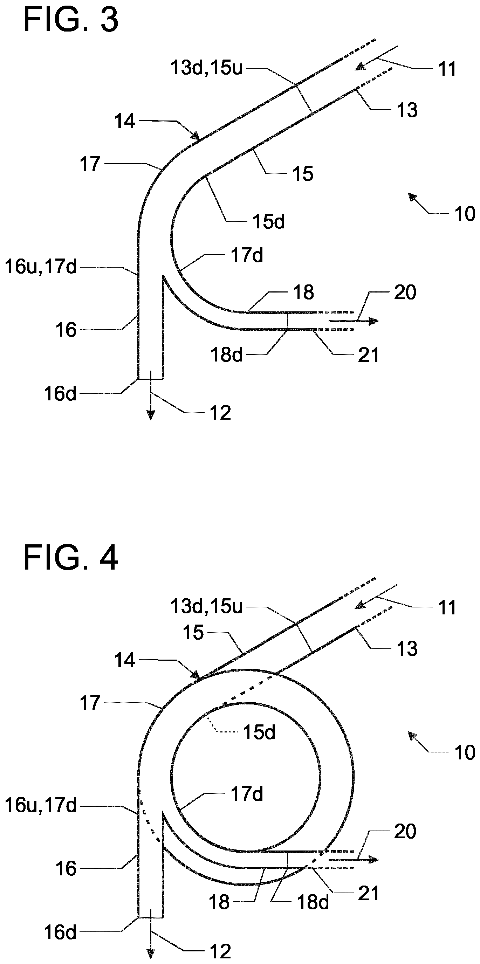

In FIG. 3, there is schematically depicted a downstream part of a third embodiment of a blow line 10 for guiding a steam-and-fibers stream 11, 12 to a not shown dryer, such as that shown at reference sign 34 in FIG. 5 to FIG. 7, of a not shown fibers-processing plant, such as the fiberboard plant shown at reference sign 31 in FIG. 5 to FIG. 7. This embodiment resembles the first embodiment of the blow line 10 so that merely the respective differences will be explained more extensively in the following.

In this third embodiment of the blow line 10, the bend 14 is designed according to a third embodiment resembling the first embodiment of the bend 14 so that merely the respective differences will be explained more extensively in the following. In this bend 14, the first bending angle of the bent section 17 is less than 90°, namely for instance 60°.

In FIG. 4, there is schematically depicted a downstream part of a fourth embodiment of a blow line 10 for guiding a steam-and-fibers stream 11, 12 to a not shown dryer, such as that shown at reference sign 34 in FIG. 5 to FIG. 7, of a not shown fibers-processing plant, such as the fiberboard plant shown at reference sign 31 in FIG. 5 to FIG. 7. This embodiment resembles the third embodiment of the blow line 10 so that merely the respective differences will be explained more extensively in the following.

In this fourth embodiment of the blow line 10, the bend 14 is designed according to a fourth embodiment resembling the third embodiment of the bend 14 so that merely the respective differences will be explained more extensively in the following. In this bend 14, the bent section 17 is bent following a helical curve with one turn and a sixth. Thus, the steam-and-fibers stream 11, 12 flowing through the bent section 17 will rotate about a rotation angle of 420° - which is the sum of 360° for the one complete turn and 60° for the one sixth turn - but will be deflected in total only by the first bending angle which is the difference of the rotation angle minus the product of the number of complete turns times 360°, namely 60° = 420° - 1 · 360°.

In FIG. 5, there is schematically depicted a part of a first embodiment of a fiberboard plant 31 being indicative of a fibers-processing plant. This fiberboard plant 31 comprises a blow line 10 according to the first embodiment shown in FIG. 1, a refiner 32 for making fibers 19 and blowing out a steam-and-fibers stream 11, 12 into the upstream end 13u of the tube section 13, a nozzle 33 for injecting atomized glue into the steam-and-fibers stream 11, 12, and a dryer 34 for drying the fibers 19.

In this first embodiment of the fiberboard plant 31, the dryer 34 is a tube dryer with a tube in which hot, dry air, represented by arrows 35, is propelled by a not shown fan.

The refiner 32 makes fibers 19 out of wood chips by using high-pressure steam and not shown rotating refiner discs. The high-pressure steam blows the fibers 19 out through the upstream end 13u of the tube section 13 into the blow line 10 resulting in a steam-and-fibers stream 11, 12 which the blow line 10 guides via the tube section 13 to the bend 14 and further to the dryer 34. The nozzle 33 is arranged at an upstream section of the tube section 13 and injects atomized glue into the steam-and-fibers stream 11 passing by. The blow line 10 extends into the tube of the dryer 34 so that the first outlet socket 16 of the bend 14 empties into the dryer 34 and ejects the separated steam-and-fibers stream 12 into the hot, dry air 35 in the tube of the dryer 34. The bend 14 is orientated with respect to the tube of the dryer 34 such that the flow direction of the separated steam-and-fibers stream 12 leaving the first outlet socket 16 is parallel to the flow direction of the air 35 in the dryer 34.

Although only one nozzle 33 is shown in FIG. 5, at least one more such nozzle 33 may be provided according to requirements. Preferably, two or more such nozzles 33 are evenly distributed about the circumference of the tube section 13 and/or are spaced along a length of the tube section 13.

In FIG. 6, there is schematically depicted a part of a second embodiment of a fiberboard plant 31 being indicative of a fibers-processing plant. This embodiment resembles the first embodiment of the fiberboard plant 31 so that merely the respective differences will be explained more extensively in the following.

In this second embodiment of the fiberboard plant 31, the blow line 10 is designed according to the second embodiment shown in FIG. 2.

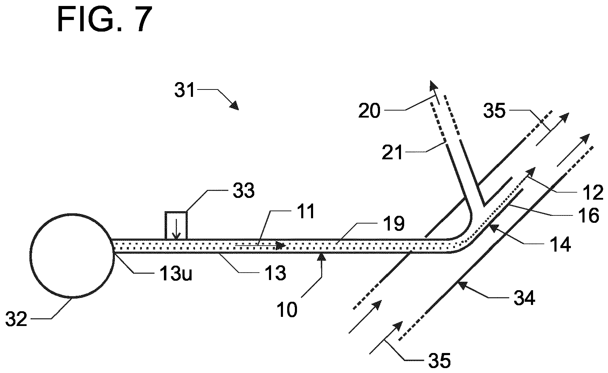

In FIG. 7, there is schematically depicted a part of a third embodiment of a fiberboard plant 31 being indicative of a fibers-processing plant. This embodiment resembles the first embodiment of the fiberboard plant 31 so that merely the respective differences will be explained more extensively in the following.

In this third embodiment of the fiberboard plant 31, the blow line 10 is designed according to the third embodiment shown in FIG. 3.

### List of Reference Signs: P1436

- 10: blow line
- 11: steam-and-fibers stream
- 12: separated steam-and-fibers stream
- 13, 13d, 13u: tube section of 10, downstream end of 13, upstream end of 13
- 14: bend
- 15, 15d, 15u: inlet socket, downstream end of 15, upstream end of 15
- 16, 16d, 16u: first outlet socket, downstream end of 16, upstream end of 16
- 17, 17d: bent section, downstream end of 17
- 18, 18d: second outlet socket, downstream end of 18
- 19: fibers
- 20: separated steam stream
- 21: recycling tube
- 22: sensor
- 23: valve
- 24: control unit
- 25: upstream section of 16
- 26: downstream section of 16
- 27: spout
- 28: first adapter piece
- 29: second adapter piece
- 30: third adapter piece
- 31: fiberboard plant
- 32: refiner
- 33: nozzle
- 34: dryer
- 35: hot air in 34

## Claims

1. Blow line (10) for guiding a steam-and-fibers stream (11, 12) to a dryer (34) or a pulp chest of a fibers-processing plant, such as a fiberboard plant (31), comprising:
• an essentially linear tube section (13) with a downstream end (13d);
• a bend (14) comprising a first outlet socket (16) for emptying into the dryer (34) or pulp chest, and a bent section (17) that connects the downstream end (13d) of the tube section (13) to the first outlet socket (16);
**characterized in that**:
• the bend (14) further comprises a second outlet socket (18) arranged radially inwardly with respect to the first outlet socket (16);
• the bent section (17) connects the downstream end (13d) of the tube section (13) to the second outlet socket (18).

2. Blow line (10) according to claim 1, further comprising:
• a sensor (22) for measuring a flow parameter of the stream (12) in the first outlet socket (16);
• a valve (23) in the second outlet socket (18) for regulating the flow of the separated stream (20) in the second outlet socket (18).

3. Blow line (10) according to claim 2, wherein:
• the flow parameter is the pressure or the flow velocity or the mass flow rate, of the stream in the first outlet socket (16).

4. Blow line (10) according to claim 2 or 3, further comprising:
• a control unit (24) connected to the sensor (22) and the valve (23) and designed for directing the valve (23) dependent on the measured flow parameter.

5. Blow line (10) according to any of the preceding claims, wherein:
• the first outlet socket (16) comprises an upstream section (25) oppositely bent with respect to the bent section (17) of the bend (14).

6. Blow line (10) according to any of the preceding claims, wherein the bent section (17) has:
• a bending radius of at least 30 cm and/or at most 300 cm; and/or
• a first bending angle of at least 30° and/or at most 200°.

7. Fibers-processing plant (31), comprising:
• a refiner (32) for making fibers (19) and blowing out a steam-and-fibers stream (11);
• a dryer (34) for drying the fibers (19) or a pulp chest;
• a blow line (10) for guiding the steam-and-fibers stream (11) blown out by the refiner (32), to the dryer (34) or pulp chest;
wherein the blow line (10) comprises:
• an essentially linear tube section (13) with an upstream end (13u) for connection with the refiner (32), and a downstream end (13d);
• a bend (14) comprising a first outlet socket (16) for emptying into the dryer (34) or pulp chest, and a bent section (17) that connects the downstream end (13d) of the tube section (13) to the first outlet socket (16);
**characterized in that**:
• the bend (14) further comprises a second outlet socket (18) arranged radially inwardly with respect to the first outlet socket (16);
• the bent section (17) connects the downstream end (13d) of the tube section (13) to the second outlet socket (18).

8. Plant (31) according to claim 7, further comprising:
• a sensor (22) for measuring a flow parameter of the stream (12) in the first outlet socket (16);
• a valve (23) in the second outlet socket (18) for regulating the flow of the separated stream (20) in the second outlet socket (18).

9. Plant (31) according to claim 8, wherein:
• the flow parameter is the pressure or the flow velocity or the mass flow rate, of the stream in the first outlet socket (16).

10. Plant (31) according to claim 8 or 9, further comprising:
• a control unit (24) connected to the sensor (22) and the valve (23) and designed for directing the valve (23) dependent on the measured flow parameter.

11. Plant (31) according to any of claims 7 to 10, wherein:
• the first outlet socket (16) comprises an upstream section (25) oppositely bent with respect to the bent section (17) of the bend (14).

12. Plant (31) according to any of claims 7 to 11, wherein:
• the bend (14) is incorporated into or arranged in the dryer (34) or pulp chest.

13. Plant (31) according to any of claims 7 to 12, wherein the bent section (17) has:
• a bending radius of at least 30 cm and/or at most 300 cm; and/or
• a first bending angle of at least 30° and/or at most 200°.

## Patentansprüche

1. Blasleitung (10) zum Führen eines Dampf-Faser-Stroms (11, 12) zu einem Trockner (34) oder einer Faserstoffbütte einer Faserverarbeitungsanlage wie z.B. einem Faserplattenwerk (31), umfassend:
• einen im Wesentlichen linearen Rohrabschnitt (13) mit einem stromabwärtigen Ende (13d);
• einen Rohrbogen (14), umfassend einen ersten Auslassstutzen (16) zum Entleeren in den Trockner (34) oder die Faserstoffbütte und einen gebogenen Abschnitt (17), der das stromabwärtige Ende (13d) des Rohrabschnitts (13) mit dem ersten Auslassstutzen (16) verbindet;
**dadurch gekennzeichnet, dass**:
• der Rohrbogen (14) ferner einen zweiten Auslassstutzen (18) umfasst, der in Bezug auf den ersten Auslassstutzen (16) radial einwärts angeordnet ist;
• der gebogene Abschnitt (17) das stromabwärtige Ende (13d) des Rohrabschnitts (13) mit dem zweiten Auslassstutzen (18) verbindet.

2. Blasleitung (10) nach Anspruch 1, ferner umfassend:
• einen Sensor (22) zum Messen eines Strömungsparameters des Stroms (12) in dem ersten Auslassstutzen (16);
• ein Ventil (23) in dem zweiten Auslassstutzen (18) zum Regulieren der Strömung des abgetrennten Stroms (20) in dem zweiten Auslassstutzen (18).

3. Blasleitung (10) nach Anspruch 2, wobei:
• der Strömungsparameter der Druck oder die Strömungsgeschwindigkeit oder der Massendurchsatz des Stroms in dem ersten Auslassstutzen (16) ist.

4. Blasleitung (10) nach Anspruch 2 oder 3, ferner umfassend:
• eine Steuereinheit (24), die mit dem Sensor (22) und dem Ventil (23) verbunden ist und dafür ausgelegt ist, das Ventil (23) in Abhängigkeit von dem gemessenen Strömungsparameter zu regeln.

5. Blasleitung (10) nach einem der vorhergehenden Ansprüche, wobei:
• der erste Auslassstutzen (16) einen stromaufwärtigen Abschnitt (25) umfasst, der in Bezug auf den gebogenen Abschnitt (17) des Rohrbogens (14) entgegengesetzt gebogen ist.

6. Blasleitung (10) nach einem der vorhergehenden Ansprüche, wobei der gebogene Abschnitt (17) Folgendes aufweist:
• einen Biegeradius von wenigstens 30 cm und/oder höchstens 300 cm; und/oder
• einen ersten Biegewinkel von wenigstens 30° und/oder höchstens 200°.

7. Faserverarbeitungsanlage (31), umfassend:
• einen Refiner (32) zum Herstellen von Fasern (19) und zum Ausblasen eines Dampf-Faser-Stroms (11);
• einen Trockner (34) zum Trocknen der Fasern (19) oder eine Faserstoffbütte;
• eine Blasleitung (10) zum Führen des durch den Refiner (32) ausgeblasenen Dampf-Faser-Stroms (11) zu dem Trockner (34) oder der Faserstoffbütte;
wobei die Blasleitung (10) Folgendes umfasst:
• einen im Wesentlichen linearen Rohrabschnitt (13) mit einem stromaufwärtigen Ende (13u) zur Verbindung mit dem Refiner (32) und einem stromabwärtigen Ende (13d);
• einen Rohrbogen (14), umfassend einen ersten Auslassstutzen (16) zum Entleeren in den Trockner (34) oder die Faserstoffbütte und einen gebogenen Abschnitt (17), der das stromabwärtige Ende (13d) des Rohrabschnitts (13) mit dem ersten Auslassstutzen (16) verbindet;
**dadurch gekennzeichnet, dass**:
• der Rohrbogen (14) ferner einen zweiten Auslassstutzen (18) umfasst, der in Bezug auf den ersten Auslassstutzen (16) radial einwärts angeordnet ist;
• der gebogene Abschnitt (17) das stromabwärtige Ende (13d) des Rohrabschnitts (13) mit dem zweiten Auslassstutzen (18) verbindet.

8. Anlage (31) nach Anspruch 7, ferner umfassend:
• einen Sensor (22) zum Messen eines Strömungsparameters des Stroms (12) in dem ersten Auslassstutzen (16);
• ein Ventil (23) in dem zweiten Auslassstutzen (18) zum Regulieren der Strömung des abgetrennten Stroms (20) in dem zweiten Auslassstutzen (18).

9. Anlage (31) nach Anspruch 8, wobei:
• der Strömungsparameter der Druck oder die Strömungsgeschwindigkeit oder der Massendurchsatz des Stroms in dem ersten Auslassstutzen (16) ist.

10. Anlage (31) nach Anspruch 8 oder 9, ferner umfassend:
• eine Steuereinheit (24), die mit dem Sensor (22) und dem Ventil (23) verbunden ist und dafür ausgelegt ist, das Ventil (23) in Abhängigkeit von dem gemessenen Strömungsparameter zu regeln.

11. Anlage (31) nach einem der Ansprüche 7 bis 10, wobei:
• der erste Auslassstutzen (16) einen stromaufwärtigen Abschnitt (25) umfasst, der in Bezug auf den gebogenen Abschnitt (17) des Rohrbogens (14) entgegengesetzt gebogen ist.

12. Anlage (31) nach einem der Ansprüche 7 bis 11, wobei:
• der Rohrbogen (14) in den/dem Trockner (34) oder die/der Faserstoffbütte integriert oder angeordnet ist.

13. Anlage (31) nach einem der Ansprüche 7 bis 12, wobei der gebogene Abschnitt (17) Folgendes aufweist:
• einen Biegeradius von wenigstens 30 cm und/oder höchstens 300 cm; und/oder
• einen ersten Biegewinkel von wenigstens 30° und/oder höchstens 200°.

## Revendications

1. Installation de soufflage (10) pour guider un flux de vapeur et de fibres (11, 12) vers un séchoir (34) ou un cuvier à pâte d'une usine de traitement de fibres, telle qu'une usine de panneau de fibres de bois (31), comprenant :
• une section de tube essentiellement linéaire (13) avec une extrémité aval (13d) ;
dans le séchoir (34) ou cuvier à pâte, et une section coudée (17) qui raccorde l'extrémité aval (13d) de la section de tube (13) au premier entonnoir de décharge (16) ;
**caractérisée en ce que** :
• le coude (14) comprend en outre un second entonnoir de décharge (18) agencé radialement vers l'intérieur par rapport au premier entonnoir de décharge (16) ;
• la section coudée (17) raccorde l'extrémité aval (13d) de la section de tube (13) au second entonnoir de décharge (18).

2. Installation de soufflage (10) selon la revendication 1, comprenant en outre :
• un capteur (22) pour mesurer un paramètre d'écoulement du flux (12) dans le premier entonnoir de décharge (16) ;
• une vanne (23) dans le second entonnoir de décharge (18) pour réguler l'écoulement du flux séparé (20) dans le second entonnoir de décharge (18).

3. Installation de soufflage (10) selon la revendication 2, dans laquelle :
• le paramètre d'écoulement est la pression ou la vitesse d'écoulement ou le débit massique du flux dans le premier entonnoir de décharge (16).

4. Installation de soufflage (10) selon la revendication 2 ou 3, comprenant en outre :
• une unité de commande (24) raccordée au capteur (22) et à la vanne (23) et conçue pour diriger la vanne (23) en fonction du paramètre d'écoulement mesuré.

5. Installation de soufflage (10) selon l'une quelconque des revendications précédentes, dans laquelle :
• le premier entonnoir de décharge (16) comprend une section amont (25) coudée à l'opposé par rapport à la section coudée (17) du coude (14).

6. Installation de soufflage (10) selon l'une quelconque des revendications précédentes, dans laquelle la section coudée (17) a :
• un rayon de coudage d'au moins 30 cm et/ou d'au plus 300 cm ; et/ou
• un premier angle de coudage d'au moins 30° et/ou d'au plus 200°.

7. Usine de traitement de fibres (31), comprenant :
• un raffineur (32) pour réaliser des fibres (19) et souffler un flux de vapeur et de fibres (11) ;
• un séchoir (34) pour sécher les fibres (19) ou un cuvier à pâte ;
• une installation de soufflage (10) pour guider le flux de vapeur et de fibres (11) soufflé par le raffineur (32), vers le séchoir (34) ou cuvier à pâte ;
dans laquelle l'installation de soufflage (10) comprend :
• une section de tube essentiellement linéaire (13) avec une extrémité amont (13u) pour un raccordement avec le raffineur (32), et une extrémité aval (13d) ;
• un coude (14) comprenant un premier entonnoir de décharge (16) pour vider dans le séchoir (34) ou cuvier à pâte, et une section coudée (17) qui raccorde l'extrémité aval (13d) de la section de tube (13) au premier entonnoir de décharge (16) ;
**caractérisée en ce que** :
• le coude (14) comprend en outre un second entonnoir de décharge (18) agencé radialement vers l'intérieur par rapport au premier entonnoir de décharge (16) ;
• la section coudée (17) raccorde l'extrémité aval (13d) de la section de tube (13) au second entonnoir de décharge (18).

8. Usine (31) selon la revendication 7, comprenant en outre :
• un capteur (22) pour mesurer un paramètre d'écoulement du flux (12) dans le premier entonnoir de décharge (16) ;
• une vanne (23) dans le second entonnoir de décharge (18) pour réguler l'écoulement du flux séparé (20) dans le second entonnoir de décharge (18).

9. Usine (31) selon la revendication 8, dans laquelle :
• le paramètre d'écoulement est la pression ou la vitesse d'écoulement ou le débit massique du flux dans le premier entonnoir de décharge (16).

10. Usine (31) selon la revendication 8 ou 9, comprenant en outre :
• une unité de commande (24) raccordée au capteur (22) et à la vanne (23) et conçue pour diriger la vanne (23) en fonction du paramètre d'écoulement mesuré.

11. Usine (31) selon l'une quelconque des revendications 7 à 10, dans laquelle :
• le premier entonnoir de décharge (16) comprend une section amont (25) coudée à l'opposé par rapport à la section coudée (17) du coude (14).

12. Usine (31) selon l'une quelconque des revendications 7 à 11, dans laquelle :
• le coude (14) est incorporé ou agencé dans le séchoir (34) ou cuvier à pâte.

13. Usine (31) selon l'une quelconque des revendications 7 à 12, dans laquelle la section coudée (17) a :
• un rayon de coudage d'au moins 30 cm et/ou d'au plus 300 cm ; et/ou
• un premier angle de coudage d'au moins 30° et/ou d'au plus 200°.
